# EUROPEAN PATENT APPLICATION

(11) **EP 3 922 144 A2**
(43) Date of publication of application: **15.12.2021**
(21) Application number: 21178681.9
(22) Date of filing: 10.06.2021
(51) Int. Cl.: A47G 25/32, A47G 25/36, A47G 25/38, B29C 45/16

(54) **HANGER AND METHOD FOR PROVIDING IT**

(30) Priority: 11.06.2020 IT 202000013960
(71) Applicant: LA. M. Plastic S.r.l., 35010 Villa Del Conte (PD) (IT)
(72) Inventor: ANTONELLO, Angelo, 35010 Villa del Conte (PD) (IT)
(74) Representative: Modiano, Micaela Nadia

(57) **Abstract**

A hanger (10) comprising:
- a main body (11),
- a hook (12, 112), which extends from the main body (11).

The hanger (10) is at least partially compostable.

## Description

The present invention relates to a hanger.

The invention also relates to the method for providing it.

A hanger is a device used to hang an item of clothing/garment on it. The hanger normally comprises:
- a main body, for supporting the item of clothing/garment,
- a hook, extending from the main body, usually from a middle portion thereof.

Currently, various types of hanger are known and widespread which have different shapes and dimensions depending on the type of item of clothing/garment for which they are designed.

The following are known, for example:
- hangers for coats or jackets, in which the main body is shaped like the two shoulders of a human body,
- hangers for skirts or trousers, in which the main body has at least one bar which has a horizontal extension in the configuration for use.

Usually:
- the main body of the hanger is made of plastic material and is self-supporting and considerably rigid, since it has to bear the weight of the item of clothing/garment which, in some cases, can be even on the order of few kilograms,
- the hook is made of metallic material.

In order to facilitate the use of the hanger, the hook, which is coupled to the main body, can normally rotate about its own axis of extension.

This background art has some drawbacks.

In fact, the materials of which the hanger is normally made:
- either are not recyclable, and this entails the need for disposal in a landfill, with consequent increasingly greater space occupation at disposal sites, or in incinerators, with the consequent generation of pollutants and toxic substances such as, for example, dioxin, which is released when plastics are burned in an incinerator,
- or are recyclable, at least partially, but in order to recycle them, long processes (which entail first of all the separation of the hook and the main body) are required, with considerable energy consumption and consequent production of pollutants.

In both cases, considerable environmental pollution is caused.

Currently, public opinion is increasingly sensitive to the issues of safeguarding the environment and of human health which derives from this safeguarding.

The aim of the present invention is to provide a hanger that is capable of improving the background art in one or more of the aspects mentioned above.

Within this aim, an object of the invention is to provide a hanger the disposal of which does not entail environmental pollution.

Another object of the invention is to devise a hanger that can be provided easily and readily.

Another object of the invention is to devise a method for providing a hanger that achieves the aim and objects illustrated above.

A further object of the present invention is to overcome the drawbacks of the background art in a manner that is alternative to any existing solutions.

Not least object of the invention is to provide a hanger that is highly reliable, relatively easy to provide and at competitive costs.

This aim and these and other objects which will become better apparent hereinafter are achieved by a hanger comprising:
- a main body,
- a hook, which extends from said main body,
said hanger being characterized in that it is at least partially compostable.

Further characteristics and advantages of the invention will become better apparent from the description of a preferred but not exclusive embodiment of the hanger according to the invention, illustrated by way of non-limiting example in the accompanying drawings, wherein:

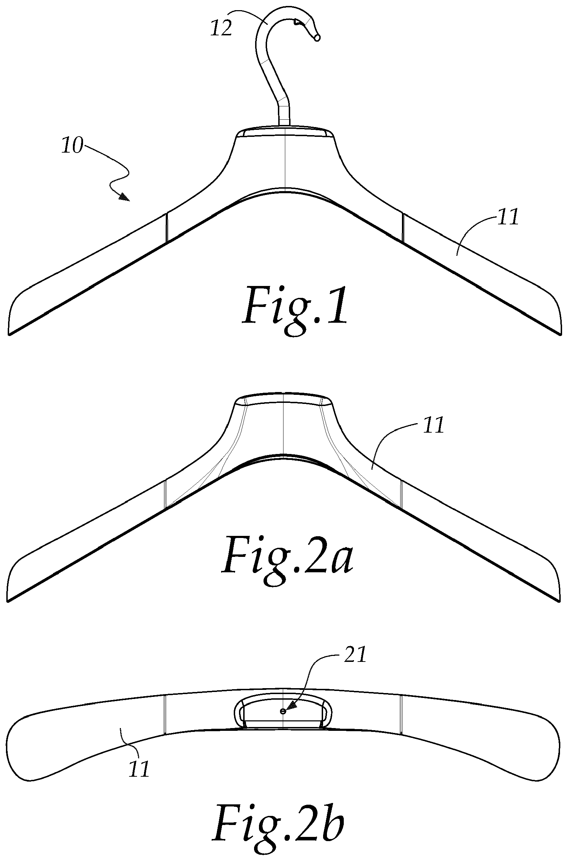

- Figure 1 is a general view of a hanger according to the invention;
- Figures 2a and 2b are two views, respectively a side view and a top view, of a first component of the hanger of Figure 1;

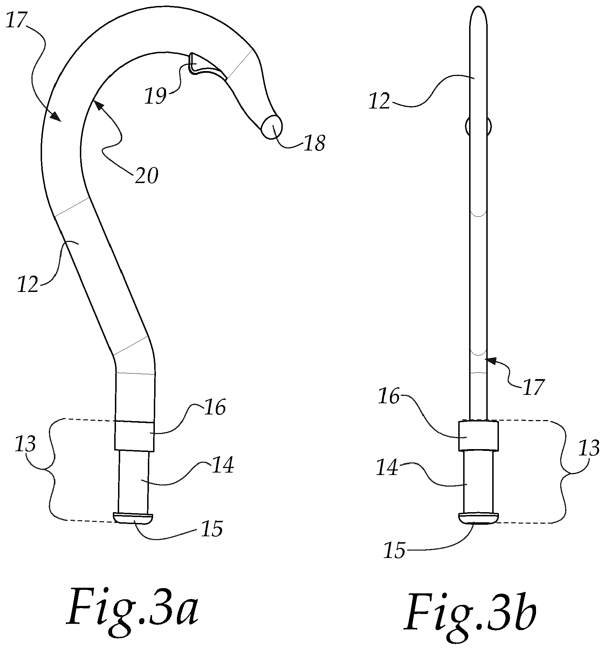

- Figures 3a and 3b are two views of a second component of the hanger of Figure 1;
- Figures 4a and 4b are two views of another embodiment of the second component of Figures 3a and 3b,
- Figures 5a to 5c are schematic views of a method for providing the hanger of Figures 1 to 3b.

With reference to the figures, a hanger according to the invention is generally designated by the reference numeral 10.

The hanger 10 comprises:
- a main body 11, adapted to support an item of clothing/garment,
- a hook 12, which extends from said main body 11.

Such hook 12 is able to rotate about its own axis of extension and is extended in a direction substantially at right angles to the direction of extension of the main body 11, substantially from a middle portion of the latter.

In the example shown in the figures, the hanger 10 is adapted for a coat or jacket and the main body 11 is shaped like the two shoulders of a human body; however, in other embodiments, not shown in the figures, the hanger can be adapted for other types of clothing, such as skirts or trousers, and can have at least one bar which has a horizontal extension in the configuration for use and/or clamps for gripping the item of clothing.

For example, in one embodiment, not shown in the figures, the hanger is designed for underwear and has a bar with two clamps at the end of the bar.

In another embodiment, not shown in the figures, the hanger according to the invention has a bar and two hooks at the ends of the bar.

One of the particularities of the invention resides in that the hanger 10 is totally biodegradable and at least partially compostable.

In particular, the hanger 10 is predominantly compostable.

Even more preferably, the hanger 10 according to the invention is substantially compostable at least for 80% of its weight.

In the case shown in the figures, the hanger 10 is compostable substantially for 90% of its weight.

Higher percentages are obtained depending on the shape and characteristics of the hanger according to the invention and for hooks with more limited thicknesses, inserted in hangers for items of clothing/garments that need a limited load, it is possible to achieve complete compostability.

Specifically, the main body 11 is compostable, while the hook 12 is at least biodegradable.

Another of the particularities of the invention resides in that the main body 11 and the hook 12 are made of materials that melt at two different temperatures and are incompatible for mutual adhesion.

In the present description, the expression "incompatible for mutual adhesion" means that the two materials do not adhere to each other even if one is melted and pressed against the other.

This incompatibility to mutual adhesion of the materials derives from their characteristics.

Specifically, the main body 11 and the hook 12 are made of bioplastic.

The main body 11 is, for example, made of plastic material, with a melting point of approximately 180°C, which comprises:
- approximately 80% by weight of PLA (polylactic acid)
- approximately 20% by weight of PBS (polybutylene succinate).

Such main body 11 is hollow and its shell has a thickness substantially comprised between 1.2 mm and 1.7 mm.

This thickness allows the main body 11 to bear loads even on the order of 5 kg, complying with the legal requirements for biodegradability and compostability defined by European standard EN13432 of 2002.

The hook 12 is, for example, made of plastic material, with a melting point of approximately 230°C, and is made of PGA (polyglycolic acid).

The hook 12 has a portion 13 for coupling in the main body 11 and an engagement portion 17, which extends from the preceding one.

The portion 13 of the hook 12 has, in the following order:
- a first part 16 having a circular transverse cross-section,
- an intermediate part 14 having a smaller circular cross-section than the cross-section of the preceding part,
- an end 15 that is wider with respect to the intermediate part 14 and coincides with a first end of the hook 12.

In the present description, the expression "transverse cross-section" refers to the cross-section on the plane that is locally at right angles to the direction of longitudinal extension of the hook 12.

The first part 16 protrudes from the main body 11.

Such intermediate part 14 is inserted in a corresponding through hole 21 of the main body 11, to which it is substantially complementary.

The wider end 15 has a transverse cross-section that is larger than the cross-section of the hole 21 of the main body 11 in which the intermediate part 14 is inserted.

This produces an interference between the end 15 and the edge of the hole 21 of the main body 11, described above.

The hook 12 has a substantially oval transverse cross-section, at least in the engagement portion 17 which is extended between:
- the first part 16 of the coupling portion 13,
- the second end 18 of the hook 12, which is opposite the first end 15.

The hook 12 has a thickness on the order of approximately 4 mm in the engagement portion 17.

The shape of the cross-section of the hook 12 and its thickness allow to distribute the weight of the garment over a larger surface and to give rigidity thereto, allowing it to bear loads even on the order of 5 kg, while complying with the already mentioned legal requirements, at least as regards biodegradability.

Another particularity of the invention resides in that the hook 12 has a substantially shark tooth-shaped protrusion 19 proximate to the second end 18 along the internal curvature of the hook.

The expression "internal curvature", in the present description, refers to the curvature of the hook 12 that is to be directed toward the bar to which the hanger 10 is engaged, and is in contact therewith during use.

The protrusion 19 is adapted to avoid the rotation of the hook 12, and therefore of the hanger 10, about the bar to which the latter is engaged, when in use, and to maintain the load of the item of clothing/garment evenly distributed, particularly on the main body 11.

The invention also relates to a method for providing the hanger 10.

In fact, the hook 12 and the main body 11 made of materials that melt at two different temperatures and incompatible for mutual adhesion, allow to provide a hanger 10, with a rotatable hook, by first molding the main body 11 and then, conveniently, the hook 12 thereon.

The hanger 10 is provided simply by means of two successive molding processes.

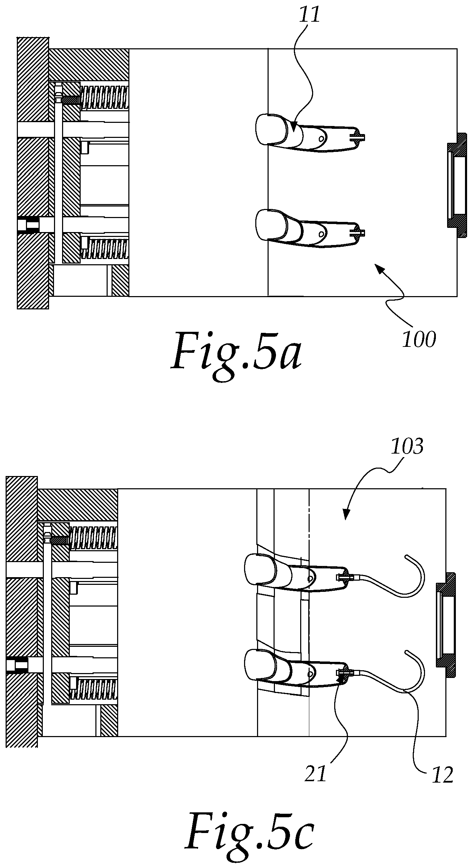

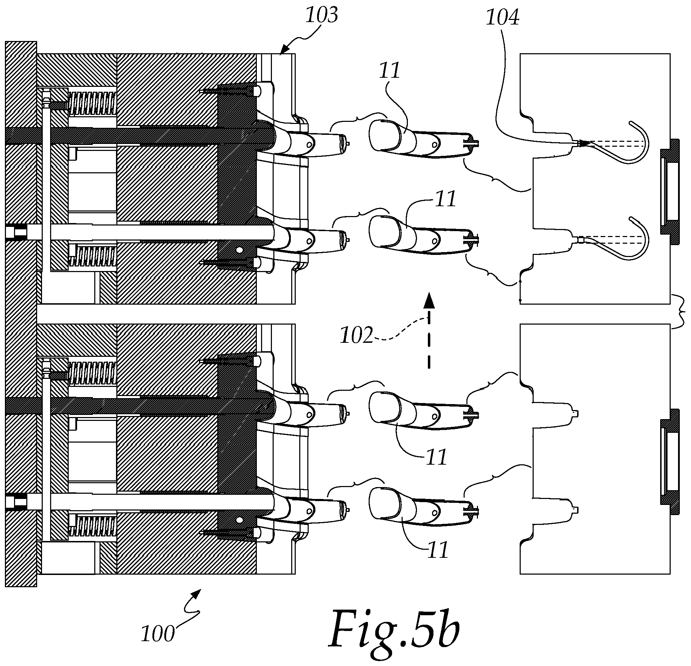

The method for providing the hanger 10 entails the following steps:
- injecting the basic plastic material of the main body 11, in the melted state, into an appropriate first mold 100, obtaining the main body 11, with a through hole 21 for the coupling of the hook 12, as shown in Figure 5a,
- moving the main body 11, which has just been molded, into a second mold 103 (along the direction of the arrow 102), arranging it so as to fluidically connect the hole 21 for the coupling of the hook 12 to the impression 104 of the second mold 103, as shown in Figure 5b,

- injecting the basic plastic material of the hook 12, in the melted state, inside the impression of the second mold and, by virtue of the fluidic connection between the two, at least partially also in the hole 21 for coupling, as shown in Figure 5c,
- extracting/cooling the assembly, obtaining the hanger 10.

The impression of the second mold is shaped so as to produce, at the end of the molding process, the wider end 15.

In this manner, at the end of the cooling and polymerization of the basic plastic material of the hook 12, one obtains both the hook 12 and the nonremovable association thereof with the main body 11 but with the possibility to rotate the hook 12 about its own axis of extension.

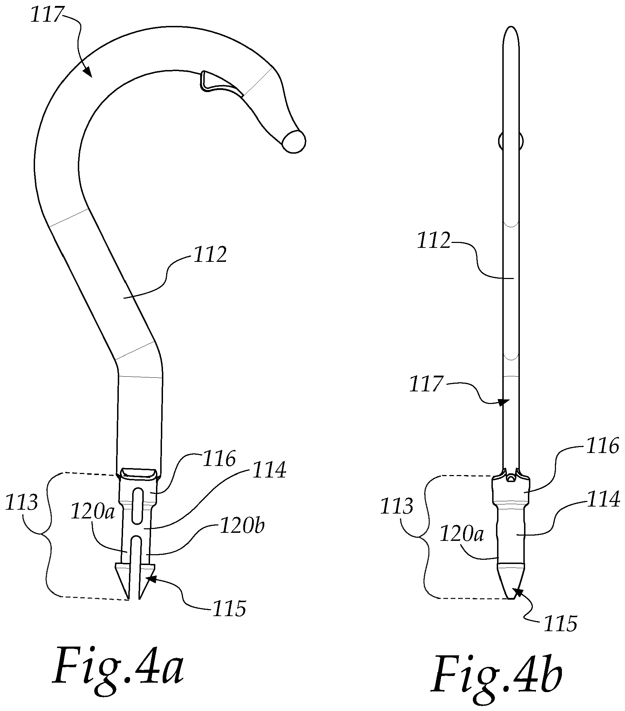

Figures 4a and 4b show another embodiment of the hook, which is designated by the reference numeral 112, of a hanger according to the invention.

The hook 112 is similar to the hook described previously as regards the production materials and its engagement portion 117, but differs from the previous one as regards its portion 113 for coupling in the main body 11.

The coupling portion 113 has, in the following order:
- a first part 116 having a circular transverse cross-section,
- an intermediate part 114 having a circular cross-section which is smaller than the preceding part,
- an end 115 which is wider with respect to the intermediate part 114 and coincides with a first end of the hook 112.

The first part 116 protrudes from the main body 11.

The intermediate part 114 is inserted in the corresponding through hole 21 of the main body 11, to which it is substantially complementary.

Two mirror-symmetrical elastic elements 120a, 120b shaped like a half mushroom extend from the intermediate portion 114 and their cap corresponds to the wider end 115.

The wider end 115 has a larger transverse cross-section than the cross-section of the hole 21 of the main body in which the intermediate part 114 is inserted, and is constituted by the cap of the mushroom formed by the two elastic elements 120a, 120b.

This creates an interference between the end 115 and the rim of the hole 21 of the main body 11, described above.

The hook 112 is inserted by a snap action in the main body 11 of the hanger.

In this second embodiment, the main body 11 and the hook 112 are molded separately and then the hook 112 is inserted by snap action, manually or by means of tools, with its portion 113 for coupling in the hole 21 of the main body 11.

It should be noted that the hook is customizable with a logo or lettering that can be molded in relief or printed with ink.

In practice it has been found that the invention achieves the intended aim and objects, providing a hanger the disposal of which does not entail environmental pollution.

The invention provides a hanger that can be provided easily and readily.

Furthermore, the invention provides a method for providing a hanger that achieves the aim and objects illustrated above.

The invention thus conceived is susceptible of numerous modifications and variations, all of which are within the scope of the accompanying claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application no. 102020000013960, from which this application claims priority, are incorporated by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A hanger (10) comprising:
- a main body (11),
- a hook (12, 112), which extends from said main body (11), said hanger (10) being **characterized in that** it is at least partially compostable.

2. The hanger (10) according to claim 1, **characterized in that** it is predominantly compostable.

3. The hanger (10) according to one or more of the preceding claims, **characterized in that** it is totally biodegradable.

4. The hanger (10) according to one or more of the preceding claims, **characterized in that** it is substantially compostable at least for 80% of its weight.

5. The hanger (10) according to one or more of the preceding claims, **characterized in that** said main body (11) is compostable while said hook (12, 112) is at least biodegradable.

6. The hanger (10) according to one or more of the preceding claims, **characterized in that** said main body (11) and said hook (12, 112) are made of materials that melt at two different temperatures and are incompatible for mutual adhesion.

7. The hanger (10) according to one or more of the preceding claims, **characterized in that** said main body (11) is made of plastic material, with a melting point of approximately 180°C, which comprises:
- approximately 80% by weight of PLA,
- approximately 20% by weight of PBS.

8. The hanger (10) according to one or more of the preceding claims, **characterized in that** said main body (11) is hollow and its shell has a thickness substantially comprised between 1.5 mm and 1.7 mm.

9. The hanger (10) according to one or more of the preceding claims, **characterized in that** said hook (12, 112) is:
- able to rotate about its own axis of extension,
- made of plastic material, with a melting point of approximately 230°C,
- constituted by PGA.

10. The hanger (10) according to one or more of the preceding claims, **characterized in that** said hook (12, 112) has a portion (13, 113) for coupling in said main body (11) and an engagement portion (17, 117), which extends from the preceding one, said coupling portion (13, 113) having, in the following order:
- a first part (16, 116) having a circular transverse cross-section, said first part (16, 116) protruding from said main body (11),
- an intermediate part (14, 114) having a circular cross-section which is smaller than the cross-section of the preceding part, said intermediate part (14, 114) being inserted in a corresponding through hole (21) of said main body (11), to which it is substantially complementary,
- an end (15, 115) that is wider with respect to said intermediate part (14, 114) and coincides with a first end of said hook (12, 112), said wider end (15, 115) having a larger transverse cross-section than the cross-section of said hole (21) of said main body (11).

11. The hanger (10) according to one or more of the preceding claims, **characterized in that** said hook (12, 112) has a substantially oval transverse cross-section, at least in said engagement portion (17, 117), said engagement portion (17, 117) being extended between:
- said first part (16, 116) of said coupling portion (13, 113),
- a second end (18) of said hook (12, 112) that is opposite said first end (15, 115).

12. The hanger (10) according to one or more of the preceding claims, **characterized in that** said hook (12, 112) has a thickness on the order of 4 mm at least in the engagement portion (17, 117).

13. The hanger (10) according to one or more of the preceding claims, **characterized in that** said hook (12) has a protrusion (19) proximate to said second end (18), along the internal curvature of said hook (12).

14. The hanger (10) according to one or more of the preceding claims, **characterized in that** two mirror-symmetrical elastic elements (120a, 120b) shaped like a half mushroom extend from said intermediate part (114), their cap corresponding to said wider end (115), said wider end (115) being constituted by said cap of the mushroom formed by said elastic elements (120a, 120b).

15. The hanger (10) according to one or more of the preceding claims, **characterized in that** it is provided by means of two successive molding processes.

16. A method for providing a hanger (10) according to one or more of the preceding claims, **characterized in that** it comprises the following steps:
- injecting the basic plastic material of said main body (11), in the melted state, into a first mold (100), obtaining said main body (11), with said through hole (21),
- moving said main body (11) into a second mold (103), arranging it so as to fluidically connect said through hole (21) to the impression (104) of said second mold (103),
- injecting the basic plastic material of said hook (12), in the melted state, within said impression (104) of said second mold (103) and, by virtue of the fluidic connection between the two, at least partially also in said through hole (21),
- extracting/cooling the assembly, obtaining said hanger (10).
